# EUROPÄISCHE PATENTSCHRIFT

(11) **EP 0 848 169 B1**
(45) Veröffentlichungstag und Bekanntmachung des Hinweises auf die Patenterteilung: **28.02.2001**
(21) Anmeldenummer: 97810942.9
(22) Anmeldetag: 03.12.1997
(51) Int. Cl.: F16B 13/00

(54) **Selbstschneidender Hinterschnittdübel**
Self-undercutting anchor
Cheville d'ancrage autocoupante

(30) Priorität: 16.12.1996 DE 19652278
(43) Veröffentlichungstag der Anmeldung: 17.06.1998
(73) Patentinhaber: HILTI Aktiengesellschaft, 9494 Schaan (LI)
(72) Erfinder: Popp, Franz, 86807 Buchloe (DE); Raber, Stefan, 86916 Kaufering (DE)
(74) Vertreter: Wildi, Roland

(56) Entgegenhaltungen:
- FR-A- 2 138 139
- US-A- 4 702 654
- US-A- 4 984 945

## Beschreibung

Die Erfindung betrifft einen selbstschneidenden Hinterschnittdübel gemäss dem Oberbegriff des Patentanspruchs 1.

In der Befestigungstechnik ist es vielfach erforderlich, weitgehend spreizdruckfreie Befestigungen zu erstellen. Insbesondere bei geringen Rand- und Achsabständen besteht bei Verankerungen mit konventionellen Spreizdübeln die Gefahr von Rissen oder sogar Abplatzern im Untergrund. Zu diesem Zweck sind Verankerungssysteme bekannt, bei denen ein spezielles Befestigungselement formschlüssig in einer Aufnahmebohrung verankert wird. Dazu wird die zylindrische Aufnahmebohrung in einer definierten Tiefe mit einer Hinterschneidung versehen. Das in die vorbereitete Aufnahmebohrung einsetzbare Befestigungselement umfasst eine Ankerstange mit einem sich in Setzrichtung erweiternden Kopfteil und eine Hülse mit einer Durchgangsbohrung, die auf die Ankerstange aufgeschoben ist. Die Hülse ist mit ausstellbaren Segmenten versehen, die durch eine Relativverschiebung der Hülse und der Ankerstange in die Hinterschneidung ausstellbar sind.

Zur Erstellung der Hinterschneidung ist in den meisten Fällen ein spezielles Gerät erforderlich, welches eine in der Aufnahmebohrung exzentrisch umlaufende, abrasive Schneide aufweist, mit der die Hinterschneidung in die Bohrlochwandung gefräst wird. Es sind auch Hinterschnittdübel bekannt, die sich beim Setzvorgang selbsttätig eine Hinterschneidung erzeugen. Ein derartiger selbstschneidender Hinterschnittanker ist beispielsweise in der US-A-4,702,654 beschrieben und besitzt eine Hülse, die an ihrem in Setzrichtung vorderen Ende Spreizlappen aufweist, die sich von einem plastischen Gelenk in Richtung eines sich konisch erweiternden Kopfteils am vorderen Ende der Ankerstange erstrecken. Die Spreizlappen sind durch das Aufschieben der Hülse auf das sich am Grund der Aufnahmebohrung abstützende Kopfteil radial ausstellbar. Die Spreizlappen sind mit stiftförmigen Schneiden ausgestattet, die in die Aussenfläche der Spreizlappen eingesetzt sind. Indem die Hülse rotiert wird, fräsen die Schneiden, die den Umfang der Hülse überragen, während des Ausstellens der Spreizlappen eine Hinterschneidung in die Bohrlochwandung. Der Setzvorgang des Hinterschnittdübels ist beendet, wenn die Hülse den erforderlichen axialen Verschiebeweg zurückgelegt hat und die Spreizlappen im gewünschten Ausmass ausgestellt sind.

Das Setzen dieses bekannten selbstschneidenden Hinterschnittdübels erfolgt mit Hilfe eines Dreh-Schlag-Bohrgerätes, um die Hülse schlagend-drehend auf das sich konisch erweiternde Kopfteil aufzutreiben. Dabei wird im wesentlichen nur die schlagende Komponente des Bohrgerätes effektiv genutzt. Insbesondere bei Eisentreffern kommt es vornehmlich zu einer Verdichtung des getroffenen Bewehrungseisens und daher kann dieser bekannte Hinterschnittdübel oftmals nicht vollständig aufgespreizt werden. Auch können sich die in die Aussenfläche der Spreizlappen eingesetzten Schneidstifte durch die hohe axiale Belastung durch die axialen Schläge des Bohrgeräts beim Setzvorgang lösen und herausfallen.

Aus der US-A-4,984,945 ist ein selbstschneidender Hinterschnittdübel bekannt, der eine Ankerstange mit einem sich in Setzrichtung erweiternden Kopfteil und eine die Ankerstange umgebende Hülse aufweist. Die Hülse ist an ihrem dem Kopfteil zugewandten Abschnitt mit durch Längsschlitze voneinander getrennten Spreizlappen ausgestattet und unter radialem Ausstellen der Spreizlappen axial auf das Kopfteil auftreibbar. Die Spreizlappen sind mit einer Anzahl von axial hintereinander angeordneten, in Umfangsrichtung verlaufenden Schneiden ausgestattet. Dieser bekannte Hinterschnittdübel ist für einen rein axialen Setzvorgang vorgesehen, bei dem die Hülse, ohne zusätzliche Rotation auf das Kopfteil aufgetrieben wird. Falls die Hülse zusätzlich während des axialen Vortreibens rotiert wird, bilden die Schneiden an den vorlaufenden Längskanten der Spreizlappen axial hintereinander liegende Vorsprünge, die sich in den Untergrund graben können. Dabei können die Vorsprünge an harten Zuschlagstoffen oder auch an Armierungen im Beton verhaken, und die Hülse kann unter Umständen nicht mehr vollständig auf das Kopfteil aufgetrieben werden. Dies kann zu einem unvollständig verankerten Befestigungspunkt führen, der die geforderten Lastwerte nicht erreicht und daher nicht verwendet werden darf.

Aufgabe der vorliegenden Erfindung ist es daher, diesen Nachteilen des Stands der Technik abzuhelfen. Es soll ein selbstschneidender Hinterschnittdübel geschaffen werden, mit dem die Erstellung der Hinterschneidung in einer zylindrischen Aufnahmebohrung effektiver erfolgen kann. Der selbstschneidende Hinterschnittdübel soll auch bei Kontakt mit Bewehrungseisen zuverlässig gesetzt werden können. Die Gefahr eines Verlustes der die Hinterschneidung erzeugenden schneidenden Elemente an den Spreizlappen soll verringert sein.

Die Lösung dieser Aufgaben besteht in einem selbstschneidenden Hinterschnittdübel, der die im kennzeichnenden Abschnitt des Anspruchs 1 aufgeführten Merkmale aufweist. Der erfindungsgemässe Hinterschnittdübel umfasst eine Ankerstange mit einem sich in Setzrichtung erweiternden Kopfteil und eine die Ankerstange umgebende Hülse, die an ihrem dem Kopfteil zugewandten Abschnitt mit durch Längsschlitze voneinander getrennten Spreizlappen ausgestattet ist. Die Hülse ist unter radialem Ausstellen der Spreizlappen axial auf das Kopfteil auftreibbar. Die Hülse weist wenigstens eine Schneide auf, mit der bei Rotation der Hülse der Untergrund zur Erzeugung einer Hinterschneidung abrasiv bearbeitbar ist. Die Schneide ist von einer in Drehrichtung vorlaufenden Längskante eines Spreizlappens gebildet, welche gegenüber dem Umfang der Hülse vorspringt sich wenigstens über einen Teil der axialen Länge des Spreizlappens erstreckt.

Indem die vorlaufende Längskante des Spreizlappens die Schneide bildet, können zusätzliche Schneidelemente, die in die Aussenfläche bzw. den Kantenbereich des Spreizlappens eingesetzt sind, entfallen. Die Längskante selbst überragt den Umfang der Hülse im Schneidenbereich. Auf diese Weise entfallen die zusätzlichen Arbeitsgänge zur Montage der Schneideinsätze bei der Herstellung des selbstschneidenden Hinterschnittdübels, was sich vorteilhaft auf die Herstellkosten auswirkt. Die Gefahr eines Verlustes eines Schneideinsatzes ist völlig beseitigt.

Indem die in Drehrichtung vorlaufenden Längskante gegenüber dem Umfang der Hülse um etwa 0,1mm bis etwa 15%, vorzugsweise etwa 10%, des Durchmessers der Hülse vorspringt und durch die Längsausdehnung der Schneide entsteht ein Freiwinkel, der den fräsenden Materialabtrag von der Bohrlochwandung unterstützt. Selbst bei Kontakt mit Bewehrungseisen ist die Bildung der Hinterschneidung verbessert und kann der Hinterschnittdübel vollständig gesetzt werden.

Die vorspringende Längskante kann beispielsweise durch ein Verschwenken eines Spreizlappens um eine Längsachse erstellt werden. Es erweist sich jedoch als vorteilhaft, wenn der von zwei Längsschlitzen berandete Spreizlappen wenigstens über einen Teil seiner axialen Erstreckung eine zur vorlaufenden Kante hin zunehmende Wandstärke aufweist. Diese spezielle Ausbildung der Schneide kann beispielsweise durch spanabhebende Bearbeitung oder im Kaltumformverfahren oder auf ähnliche Weise erreicht werden. Das Verhältnis der Wandstärken des Spreizlappens an der vorlaufenden Längskante zur nachlaufenden Längskante beträgt von etwa 1 : 0,9 bis etwa 1 : 0,1. Bei diesen Wandstärkenverhältnissen kann der gewünschte Überstand der Schneide erzielt werden, ohne die Formstabilität des Spreizlappens, der bei der fräsenden Bearbeitung der Bohrlochwandung relativ hohen Schwerkräften ausgesetzt ist, wesentlich zu beeinträchtigen.

Die den Umfang der Hülse überragende Längskante ist etwa 1,5 mal bis 8 mal, vorzugsweise 2 mal bis 6 mal, härter als die Hülse. Auf diese Weise sind gute Schneideigenschaften gewährleistet. Zugleich kann dadurch auch die Abnutzung der Schneide optimal gesteuert werden, damit sie nach dem Abschluss des Setzvorgangs weitgehend abgearbeitet ist und kaum mehr einen Überstand aufweist. Dadurch ist bei Belastung des gesetzten Hinterschnittdübels eine vollflächige Anlage des Schneidlappens am Untergrund gewährleistet. Dies unterstützt eine gute Kraftübertragung zwischen dem Kopfteil, dem Spreizlappen und dem Untergrund im Bereich der Hinterschneidung.

Zur weiteren Verbesserung der Abbaueigenschaften beträgt der Winkel, den die Flanken der vorlaufenden Längskante im Bereich der Schneide miteinander einschliessen, von etwa 30° bis etwa 150°. Dabei wird durch einen Winkel < 90° die spanabhebende Schneidfunktion der Schneide bei Kontakt mit Bewehrungseisen begünstigt. Bei Winkeln > 90° wird der Materialabbau in Umfangsrichtung verbessert.

Zur Erhöhung der Abbauleistung und zur Verringerung der erforderlichen Setzzeit sind mit Vorteil mehrere Schneiden vorgesehen. Die Anzahl der Schneiden kann dabei kleiner oder gleich der Anzahl der Spreizlappen sein. Bei beispielsweise bis zu 10 Spreizlappen können daher von 1 - 10 Schneiden vorgesehen sein.

Im Fall mehrerer Schneiden ist es zweckmässig, wenn die Winkel, den die Flanken der vorlaufenden Längskanten im Bereich der Schneiden miteinander einschliessen, wenigstens teilweise voneinander verschieden sind. Dabei ist es vorteilhaft, wenn jeweils eine Schneide mit einem Winkel < 90° auf eine Schneide mit einem Winkel > 90° folgt.

Die Herstellung der Schneiden kann spanabhebend oder in Kaltumformtechnik erfolgen. Besonders kostengünstig ist der erfindungsgemässe selbstschneidende Hinterschnittdübel herstellbar, wenn die Hülse ein Blech-Stanz-Biegeteil ist. Die spezielle Geometrie der Spreizlappen mit wenigstens teilweise vorspringenden vorlaufenden Längskanten kann beispielsweise durch Querwalzen der abgewickelten Blechhülse hergestellt werden, die danach gebogen wird.

Im folgenden wird die Erfindung unter Bezugnahme auf ein in den schematischen Zeichnungen dargestelltes Ausführungsbeispiel näher erläutert. Es zeigen in unterschiedlichen Massstäben:
- Fig. 1: einen Axialschnitt eines erfindungsgemäss ausgebildeten Hinterschnittdübels;
- Fig. 2: einen Querschnitt der Hülse im Bereich der Spreizlappen; und
- Fig. 3: eine Hülse als Blech-Stanz-Biegeteil im abgewickelten Zustand.

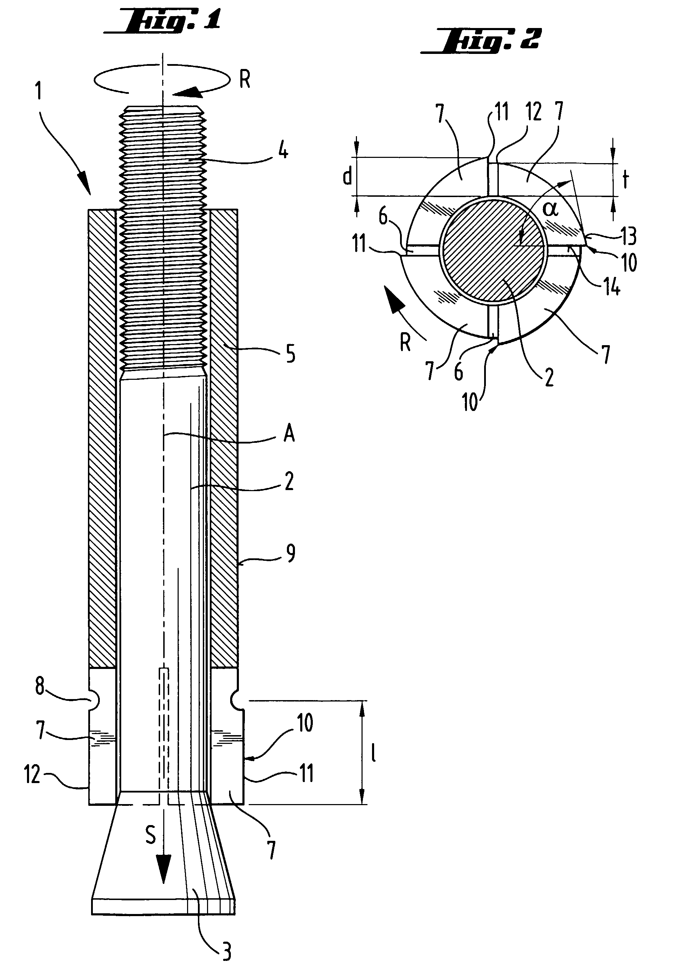

In Fig. 1 ist ein Ausführungsbeispiel eines erfindungsgemäss ausgebildeten selbstschneidenden Hinterschnittdübels gesamthaft mit dem Bezugszeichen 1 versehen. Der Hinterschnittdübel umfasst eine Ankerstange 2 mit einem sich in Setzrichtung S erweiternden Kopfteil 3. Das Kopfteil 3 besitzt, wie beispielsweise dargestellt, die Gestalt eines Kegelstumpfes. Anstelle einer Kegelfläche kann das Kopfteil auch eine konkav gekrümmte Aussenfläche aufweisen. Am dem Kopfteil 3 gegenüberliegenden Endbereich der Ankerstange 2 ist ein Aussengewinde 4 als Lastangriffsmittel vorgesehen. Auf der Ankerstange 2 ist eine Hülse 5 axial verschiebbar angeordnet. Die Hülse 5 besitzt an ihrem dem Kopfteil 3 zugewandten Abschnitt eine Anzahl von durch axial verlaufende Schlitze 6 voneinander getrennte Spreizlappen 7. Die Spreizlappen 7 sind durch ein plastisches Gelenk 8 von der übrigen Hülse 5 getrennt. Das plastische Gelenk 8 wird, wie beispielsweise dargestellt, von einer senkrecht zur Dübelachse A angeordneten umlaufenden Rille an der Aussenfläche 9 der Hülse gebildet. Die Spreizlappen 7 weisen eine axiale Länge auf, die sich vom plastischen Gelenk 8 zum freien Vorderende der Hülse 5 erstreckt. Durch eine Relativbewegung zwischen der Hülse 5 und der Ankerstange 2 ist die Hülse 5 unter Ausstellen der Spreizlappen 7 auf das sich in Setzrichtung S erweiternde Kopftteil 3 auftreibbar.

Zur Herstellung einer Hinterschneidung in einer vorbereiteten zylindrischen Aufnahmebohrung muss die Bohrlochwandung in einer bestimmten Tiefe fräsend bearbeitet werden. Zu diesem Zweck ist die Hülse 5 im Bereich der ausstellbaren Spreizlappen 7 mit wenigstens einer Schneide 10 ausgestattet. Das in Fig. 1 dargestellte Ausführungsbeispiel des erfindungsgemässen Hinterschnittdübels weist mehrere Schneiden 10 auf. In einer vorteilhaften Ausführungsvariante der Erfindung entspricht die Anzahl der Schneiden 10 der Anzahl der Spreizlappen 7. Die Schneiden 10 sind an den in Drehrichtung R der Hülse 5 vorlaufenden Längskanten 11 der Spreizlappen 7 angeordnet und erstrecken sich wenigstens über einen Teil der Länge I der Spreizlappen 7. Vorzugsweise erstrecken sich die Schneiden 10, wie dargestellt, über die gesamte vorlaufende Längskante 11 der Spreizlappen 7. Die Schneiden 10 überragen die Aussenfläche 9 der Hülse 5 mindestens um etwa 0,1 mm. Der Überstand richtet sich nach dem Durchmesser der Hülse 5 und beträgt maximal bis etwa 15%, vorzugsweise bis etwa 10%, des Durchmessers der Hülse 5. Beim drehenden Auftreiben der Hülse 5 auf das sich in Setzrichtung S erweiternde Kopfteil 3 werden die Schneiden 10 gegen die Bohrlochwandung gepresst. Für kleine Bohrlochdurchmesser können auch Schneiden 10 vorgesehen sein, die nicht über den Umfang der Hülse 5 hinausragen, damit ein einfaches Setzen gewährleistet ist. Durch die Drehung der Hülse 5 wird fräsend die Hinterschneidung hergestellt.

Die Schneiden 10 können Hartmetallplättchen sein, die an den vorlaufenden Längskanten 11 der Spreizlappen angeordnet sind. Gemäss der in Fig. 1 und 2 dargestellten, vorteilhaften Ausführungsvariante sind die Schneiden 10 von den vorlaufenden Längskanten 11 der Spreizlappen 7 gebildet. Die Längskanten 11 ragen dabei über den Umfang der Hülse 5 hinaus. Dies kann beispielsweise durch ein plastisches Verdrillen der Spreizlappen 7 bei der Herstellung erfolgen. Gemäss der dargestellten Variante des erfindungsgemässen Hinterschnittdübels 1 nimmt die Wandstärke d der Spreizlappen 7 von der nachlaufenden Längskante 12 zur vorlaufenden Längskante 11 hin zu. Das Verhältnis der Wandstärke d der Spreizlappen 7 an der vorlaufenden Längskante 11 zur der Wandstärke t an der nachlaufenden Längskante 12 beträgt von etwa 1 : 0,9 bis etwa 1 : 0,1.

Die an den vorlaufenden Längskanten 11 der Hülse 5 angeordneten Schneiden 10 überragen den Umfang der Hülse 5. Dadurch wird ein Freiwinkel gebildet. Zur Unterstützung der Schneidwirkung der Schneiden 10 schliessen die Flanken 13, 14 an den vorlaufenden Längskanten 11 einen Winkel a von etwa 30° bis etwa 150° ein. Dabei wird durch einen Winkel α < 90° die spanabhebende Schneidfunktion der Schneide bei Kontakt mit Bewehrungseisen begünstigt. Bei Winkeln α > 90° wird der Materialabbau in Umfangsrichtung verbessert. Vorzugsweise sind daher die Spreizlappen 7 derart angeordnet, dass ein Spreizlappen 7 mit einer vorspringenden vorlaufenden Längskante 11 und einem Winkel α < 90° auf einen Spreizlappen 7 mit einer vorlaufenden Längskante 11 und einem Winkel α > 90° folgt.

Die Schneiden 10 sind vorzugsweise so ausgebildet, dass sie bei der fräsenden Bearbeitung der Bohrlochwandung verschlissen werden. Insbesondere sollen sie bei Beendigung des Setzvorgangs weitgehend abgearbeitet sein, damit ein vollflächiges Anliegen der Aussenfläche 9 der Spreizlappen 7 an der Bohrlochwandung gewährleistet ist. Dies verbessert die Kraftübertragung zwischen dem Kopfteil 3, den Spreizlappen 7 und der Bohrlochwandung. Zu diesem Zweck ist es von Vorteil, wenn die Schneiden 10 etwa 1,5 mal bis etwa 8 mal, vorzugsweise 2 mal bis 6 mal, härter sind als die Hülse 5. Im Falle von Schneiden 10, die, wie in Fig. 1 und 2 dargestellt, von den vorlaufenden Längskanten 11 der Spreizlappen 7 gebildet sind, wird die Mindeststandfestigkeit der Schneiden 10 beispielsweise durch Härten oder Vergüten erreicht.

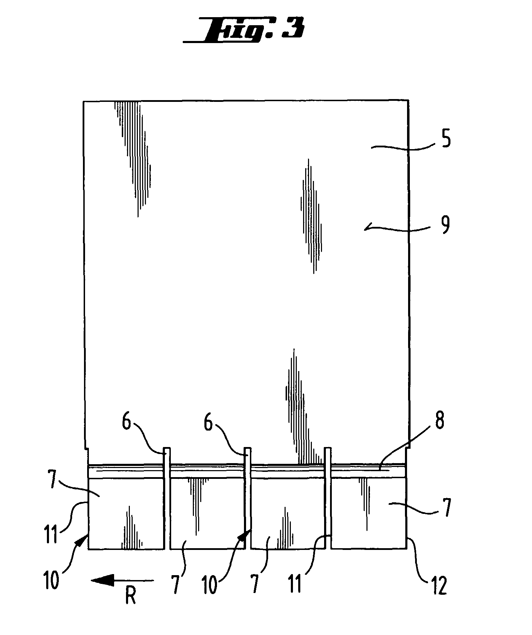

Die Hülse 5 mit Spreizlappen 7 und Schneiden 10 an den vorlaufenden Längskanten kann spanend hergestellt sein. Vorzugsweise ist die Hülse 5 ein Blech-Stanz-Biegeteil, das in Fig. 3 im abgewickelten Zustand dargestellt ist. Die Geometrie der Hülse 5 im Bereich der vorspringenden Spreizlappen 7, mit zur vorlaufenden Längskante 11 vorzugsweise stetig zunehmender Wandstärke, kann beispielsweise durch Querwalzen erzeugt werden.

## Patentansprüche

1. Selbstschneidender Hinterschnittdübel umfassend eine Ankerstange (2) mit einem sich in Setzrichtung (S) erweiternden Kopfteil (3) und eine die Ankerstange (2) umgebende Hülse (5), die an ihrem dem Kopfteil (3) zugewandten Abschnitt mit durch Längsschlitze (6) voneinander getrennten Spreizlappen (7) ausgestattet ist, wobei die Hülse (5) unter radialem Ausstellen der Spreizlappen (7) axial auf das Kopfteil (3) auftreibbar ist und an wenigstens einer in Drehrichtung (R) vorlaufenden Längskante (11) eines der Spreizlappen (7) eine Schneide (10) vorgesehen ist, die sich wenigstens über einen Teil der axialen Länge (I) des Spreizlappens (7) erstreckt, mit welcher durch Rotation der Hülse (5) der Untergrund zur Erzeugung einer Hinterschneidung abrasiv bearbeitbar ist, **dadurch gekennzeichnet**, dass die Schneide (10) von einer in Drehrichtung (R) vorlaufenden Längskante (11) des Spreizlappens (7) gebildet ist, welche gegenüber dem Umfang der Hülse (5) vorspringt.

2. Hinterschnittdübel nach Anspruch 1, dadurch gekennzeichnet, dass die Schneide (10) den Umfang der Hülse (5) im Bereich der Spreizlappen (7) um etwa 0,1mm bis etwa 15%, vorzugsweise etwa 10%, des Durchmessers der Hülse (5) überragt.

3. Hinterschittdübel nach einem der vorangehenden Ansprüche, dadurch gekennzeichnet, dass der von zwei Längsschlitzen (6) berandete Spreizlappen (7) wenigstens über einen Teil seiner axialen Erstreckung (I) eine zur vorlaufenden Längskante (11) hin zunehmende Wandstärke aufweist.

4. Hinterschnittdübel nach Anspruch 3, dadurch gekennzeichnet, dass das Verhältnis der Wandstärke (d) des Spreizlappens (7) an der vorlaufenden Längskante (11) zu der Wandstärke (t) der nachlaufenden Längskante (12) von etwa 1 : 0,9 bis etwa 1 : 0,1 beträgt.

5. Hinterschnittdübel nach einem der vorangehenden Ansprüche, dadurch gekennzeichnet, dass die über die Aussenfläche (9) der Hülse (5) hinausragende Schneide (7) etwa 1,5 mal bis etwa 8 mal, vorzugsweise 2 mal bis 6 mal, härter ist als die Hülse (5).

6. Hinterschnittdübel nach einem der vorangehenden Ansprüche, dadurch gekennzeichnet, dass der Winkel (α), den die Flanken (13, 14) der vorlaufenden Längskante (11) im Bereich der Schneide (10) miteinander einschliessen, von etwa 30° bis etwa 150° beträgt.

7. Hinterschnittdübel nach einem der vorangehenden Ansprüche, dadurch gekennzeichnet, dass mehrere Schneiden (10) vorgesehen sind, wobei die Anzahl der Schneiden (10) kleiner oder gleich der Anzahl an Spreizlappen (7) ist.

8. Hinterschnittdübel nach Anspruch 6 und 7, dadurch gekennzeichnet, dass die Winkel (α), den die Flanken (13, 14) der vorlaufenden Längskanten (11) im Bereich der Schneiden (10) miteinander einschliessen, wenigstens teilweise voneinander verschieden sind, wobei vorzugsweise eine Schneide (10) mit einem Winkel (α) kleiner als 90° auf eine Schneide (10) mit einem Winkel (α) grösser als 90° folgt.

9. Hinterschnittdübel nach einem der vorangehenden Ansprüche, dadurch gekennzeichnet, dass die Hülse (5) ein Blech-Stanz-Biegeteil ist.

## Claims

1. Selfcutting undercut dowel, comprising an anchor rod (2) with a head portion (3) which extends in the setting direction (S) and a sleeve (5) which encases the anchor rod (2) and which is at its section oriented towards the head portion (3) fitted with expanding webs (7) which are separated from each other by longitudinal slots (6), and the sleeve (5) is driven onto the head portion (3) whilst radially expanding the expanding webs (7), and on at least one longitudinal edge (11) leading in the rotary direction (3) of one of the expanding webs (7) is provided a cutter (10) which extends at least over a portion of the axial length (I) of the expanding web (7) and by means of which the underground can be abrasively processed for the purpose of producing an undercut, **characterised in that** the cutter (10) is formed by a longitudinal edge (11), which is leading in the rotary direction (R), of the expanding web (7) which projects from the periphery of the sleeve (5).

2. Undercutting dowel according to Claim 1, **characterised in that** the cutter (10) projects from the periphery of the sleeve (5) in the area of the expanding webs (7) by between approximately 0.1 mm and approximately 15%, preferably approximately 10%, of the diameter of the sleeve (5).

3. Undercutting dowel according to one of the above claims, **characterised in that** the expanding web (7) which is defined by two longitudinal slots (6) has at least over a portion of its axial extent (I) a wall thickness which increases towards the leading longitudinal edge (11).

4. Undercutting dowel according to Claim 3, **characterised in that** the ratio of wall thickness (d) of the expansion web (7) on the leading longitudinal edge (11) relative to the wall thickness (t) of the trailing longitudinal edge (12) lies between approximately 1 : 0.9 and approximately 1 : 0.1.

5. Undercutting dowel according to one of the above claims, **characterised in that** the cutter (7) which projects over the outside surface (9) of the sleeve (5) is between approximately 1.5 times and approximately 8 times, preferably between 2 times and 6 times, harder than the sleeve (5).

6. Undercutting dowel according to one of the above claims, **characterised in that** the angle (a), which is included by the flanks (13, 14) of the leading longitudinal edge (11) in the area of the cutter (10), lies between approximately 30° and approximately 150°.

7. Undercutting dowel according to one of the above claims, **characterised in that** a plurality of cutters (10) is provided, and the number of cutters (10) is lower or equal the number of expanding webs (7).

8. Undercutting dowel according to Claim 6 and 7, **characterised** **in that** the angles (a) which are included by the flanks (13, 14) of the leading longitudinal edges (11) in the area of the cutters (10), differ at least partially from each other, and preferably one cutter (10) with an angle (a) is less than 90° follows a cutter (10) with an angle (a) of more than 90°.

9. Undercutting dowel according to one of the above claims, **characterised in that** the sleeve (5) is a flexible punched sheet metal part.

## Revendications

1. Cheville à dépouille autotaraudeuse comprenant une tige d'ancrage (2), avec une partie de tête (3) s'élargissant dans le sens d'enfoncement (S), et un manchon (5) qui entoure la tige d'ancrage (2), qui est muni, dans sa portion tournée vers la partie de tête (3), de pattes expansibles, lesquelles sont séparées les unes des autres par des fentes longitudinales (6), le manchon (5) pouvant être poussé axialement sur la partie de tête (3) en écartant radialement les pattes expansibles (7), et sur au moins un bord longitudinal (11), situé à l'avant par rapport au sens de rotation (R), de l'une des pattes expansibles (7) étant prévu un taillant (10) qui s'étend au moins sur une partie de la longueur axiale (1) de la patte expansible (7) et qui, par rotation du manchon (5), permet de travailler le support par abrasion pour créer une dépouille, caractérisée en ce que le taillant (10) est formé par un bord longitudinal (11) de la patte expansible (7), lequel est situé à l'avant par rapport au sens de rotation (R) et dépasse de la périphérie du manchon (5).

2. Cheville à dépouille selon la revendication 1, caractérisée en ce que le taillant (10) dépasse de la périphérie du manchon (5) dans la zone des pattes expansibles (7) d'environ 0,1 mm jusqu'à environ 15 %, de préférence environ 10 %, du diamètre du manchon (5).

3. Cheville à dépouille selon une des revendications précédentes, caractérisée en ce que la patte expansible (7) bordée par deux fentes longitudinales (6) présente, au moins sur une partie de son extension axiale (1), une épaisseur de paroi croissante en direction du bord longitudinal avant (11).

4. Cheville à dépouille selon la revendication 3, caractérisée en ce que le rapport de l'épaisseur de paroi (d) de la patte expansible (7) au niveau du bord longitudinal avant (11) à l'épaisseur de paroi (t) du bord longitudinal arrière (12) est compris entre environ 1:0,9 et environ 1:0,1.

5. Cheville à dépouille selon une des revendications précédentes, caractérisée en ce que le taillant (7) qui dépasse de la surface extérieure (9) du manchon (5) est d'environ 1,5 fois à environ 8 fois, de préférence de 2 fois à 6 fois, plus dur que le manchon (5).

6. Cheville à dépouille selon une des revendications précédentes, caractérisée en ce que l'angle (α) formé par les flancs (13, 14) du bord longitudinal avant (11) dans la zone du taillant (10) est compris entre environ 30° et environ 150°.

7. Cheville à dépouille selon une des revendications précédentes, caractérisée en ce que plusieurs taillants (10) sont prévus, le nombre de taillants (10) étant inférieur ou égal au nombre de pattes expansibles (7).

8. Cheville à dépouille selon la revendication 6 et 7, caractérisée en ce que les angles (α) formés par les flancs (13, 14) des bords longitudinaux avant (11) dans la zone des taillants (10) sont au moins partiellement différents les uns des autres, de préférence un taillant (10) avec un angle (α) inférieur à 90° succédant à un taillant (10) avec un angle (α) supérieur à 90°.

9. Cheville à dépouille selon une des revendications précédentes, caractérisée en ce que le manchon (5) est une pièce cintrée en tôle découpée.
